# FASCICULE DE BREVET EUROPEEN

(11) **EP 2 121 362 B1**
(45) Date de publication et mention de la délivrance du brevet: **14.12.2011**
(21) Numéro de dépôt: 08762094.4
(22) Date de dépôt: 14.02.2008
(51) Int. Cl.: B60J 1/02, B62D 65/06

(54) **PROCEDE D'ASSEMBLAGE PAR COLLAGE D'UN VITRAGE SUR SON SUPPORT ET MOYENS POUR LA MISE EN OEUVRE DE CE PROCEDE**
VERFAHREN ZUR ANORDNUNG EINER GLASUR AUF IHREM HALTER DURCH VERKLEBEN, SOWIE MITTEL ZUR DURCHFÜHRUNG DES VERFAHRENS
METHOD FOR ASSEMBLING A GLAZING ON ITS HOLDER BY GLUING, AND MEANS FOR REALISING SAID METHOD

(30) Priorité: 15.02.2007 FR 0753275
(43) Date de publication de la demande: 25.11.2009
(73) Titulaire: Peugeot Citroën Automobiles SA, 78140 Vélizy-Villacoublay (FR); Saint-Gobain Glass France, 92400 Courbevoie (FR)
(72) Inventeur: JEANGEORGES, Fabrice, F-25400 Audincourt (FR); LAMOUREUX, Laurent, F-60170 Ribecourt-Dreslincourt (FR); DE PAOLI, Martial, F-60400 Cuts (FR)
(74) Mandataire: Jamet, Vincent
(86) Numéro de dépôt international: PCT/FR2008/050246
(87) Numéro de publication internationale: WO 2008/104715

(56) Documents cités:
- EP-A- 0 429 178
- DE-A1- 19 946 635
- FR-A- 1 394 484
- FR-A- 2 636 890
- FR-A- 2 760 696
- US-A- 4 139 234
- US-A- 5 586 798
- US-A- 5 603 546
- US-A1- 2001 030 449

## Description

La présente invention porte sur un procédé d'assemblage par collage d'un vitrage de véhicule sur son support, sur les moyens pour la mise en oeuvre de ce procédé, sur le vitrage préparé en vue du collage et sur le véhicule équipé d'au moins un tel vitrage.

Le vitrage est un vitrage fixe de véhicule automobile, notamment un pare-brise ou une lunette arrière et en particulier un vitrage bombé.

Le vitrage et par exemple le pare-brise, collé par sa périphérie sur la feuillure formée par la carrosserie du véhicule automobile participe à la solidité de cette dernière. Le collage entre les deux pièces réalise une liaison structurale laquelle est très importante car il est impératif que le pare-brise soit bien fixé et que l'étanchéité entre le pare-brise et la carrosserie soit réalisée et maintenue de façon permanente.

Les pare-brise des voitures présentent maintenant des formes de plus en plus complexes, avec notamment des parties en retour sur les côtés du véhicule, ce qui donne un champ de vision plus large. Cependant, ces formes complexes conduisent au fait que, lors du collage du pare-brise sur la feuillure de la carrosserie, les orientations des bords du pare-brise et de la feuillure ne sont pas complémentaires et le cordon de colle déposé sur la périphérie du pare-brise n'accoste pas la feuillure de façon satisfaisante, est soumis à un important cisaillement lors de la mise en place du pare-brise, avec pour conséquence une dégradation de la fonction mécanique du collage ainsi que de l'étanchéité du collage. Le pare-brise a été pris en exemple ci-dessus mais le problème est identique avec d'autres vitrages et particulièrement la lunette arrière.

Ce problème est particulièrement important pour les vitrages bombés qui ne peuvent pas être suffisamment déformés lors de leur intégration dans la baie et en particulier pour les vitrages feuilletés.

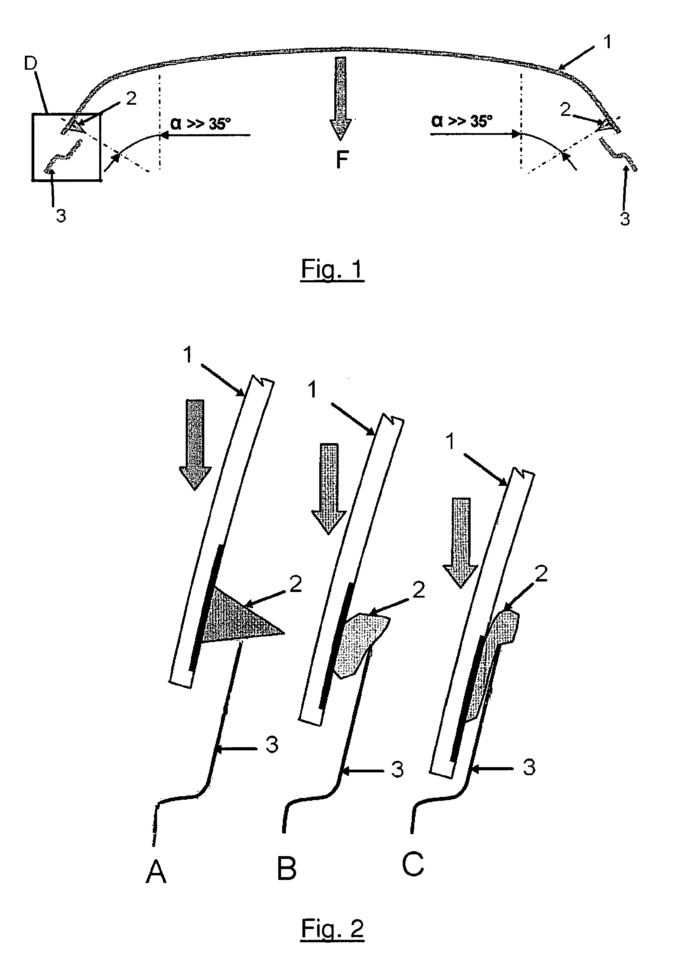

C'est ce qui est illustré sur les Figures 1 et 2 du dessin annexé.

La Figure 1 montre un vitrage 1 constitué d'un pare-brise feuilleté très cintré sur la périphérie duquel on a appliqué un cordon de colle 2. Le sens de montage sur la feuillure 3 est donné par la flèche F, et l'on peut voir que, dans l'exemple représenté, l'angle formé entre l'axe de sens du montage et l'axe du cordon de colle 2 est très supérieur à 35°, 35° étant la limite acceptable pour cet angle, comme on le verra dans ce qui suit. Les Figures 2A, 2B et 2C illustrent le cisaillement inacceptable de la colle lors de l'accostage de la feuillure 3 par le pare-brise.

En effet, pour assurer ses fonctions d'étanchéité et de fixation, le cordon de colle ne doit être ni déformé, ni cisaillé, ni tordu mais simplement aplati. En d'autres termes, le cordon de colle présent sur le vitrage doit accoster sensiblement perpendiculairement la surface de la feuillure c'est-à-dire doit être disposé sur une surface orientée sensiblement parallèlement à la feuillure 3.

L'art antérieur connaît à ce titre la demande de brevet européen N° EP 429 178 qui présente un joint de vitrage dont la piste de collage avec la carrosserie est orientée dans certaines portions du joint avec un angle différent de zéro. Dans ces portions, la piste de collage n'est donc pas parallèle au plan général du vitrage au voisinage.

Le document EP 0 429 178 A2 décrit un procédé d'assemblage par collage d'un pare-brise sur une carrosserie de véhicule, procédé suivant lequel on dépose un cordon de colle sur la partie périphérique du vitrage destinée à être collée sur une feuillure de réception formée par ledit support, on apporte ledit vitrage, sensiblement perpendiculairement à son plan moyen, contre ladite feuillure et on presse pour réaliser le collage, procédé suivant lequel, avant de disposer le cordon de colle en périphérie du vitrage, on dispose sur celui-ci une cale de compensation laquelle reçoit le cordon de colle, ladite cale de compensation présentant au moins une surface de base disposée en vis-à-vis d'une surface intérieure dudit vitrage et une surface inclinée, orientée selon un angle β par rapport à la surface de base, cet angle étant variable et variant selon la longueur de la cale de compensation.

Cette solution peut donner satisfaction pour de faibles angles entre la feuillure de la carrosserie et le plan général du vitrage, mais trouve ses limites lorsque cet angle augmente à une valeur de plus de 10°, en particulier du fait de la difficulté de mouler et surtout de démouler un vitrage dont le joint présente une piste de collage présentant un angle important avec le plan général du vitrage au voisinage.

Pour résoudre ce problème, les déposants ont recherché un moyen permettant d'assurer un accostage correct du vitrage sur sa feuillure. La solution apportée selon la présente invention consiste à modifier l'angle de la piste de collage du cordon de colle du vitrage dans les zones où les orientations du vitrage et de la feuillure ne sont pas complémentaires au moyen d'un dispositif intercalé entre le vitrage et la feuillure. Ce dispositif est constitué par au moins une cale de compensation, laquelle a une double fonction : liaison mécanique du vitrage à son support et étanchéité de la fixation du vitrage à son support.

La présente invention a donc d'abord pour objet un procédé d'assemblage par collage d'un vitrage de véhicule sur son support, en particulier d'un pare-brise sur une carrosserie de véhicule, selon la revendication 1. En outre, la présente invention a pour objet une cale de compensation selon la revendication 8, ainsi qu'un vitrage selon la revendication 17 et un véhicule selon la revendication 23. Les revendications dépendantes définissent des variantes avantageuses de ces objets.

Selon l'invention ce procédé on dépose un cordon de colle sur la partie périphérique du vitrage destinée à être collée sur une feuillure de réception formée par ledit support, on apporte ledit vitrage, sensiblement perpendiculairement à son plan moyen, contre ladite feuillure et on presse pour réaliser le collage, caractérisé par le fait qu'avant de disposer le cordon de colle en périphérie du vitrage, on vient coller sur celui-ci une cale de compensation laquelle reçoit le cordon de colle, ladite cale de compensation présentant au moins une surface de base disposée en vis-à-vis d'une surface intérieure dudit vitrage et une surface inclinée, orientée selon un angle β non nul par rapport à la surface de base, cet angle étant variable et variant selon la longueur de la cale de compensation d'une valeur proche de 0° à une première extrémité de la cale jusqu'à une valeur βₘ pour revenir à une valeur proche de 0° à une seconde extrémité, opposé à la première selon la longueur de la cale de compensation.

En particulier, on peut disposer une ou plusieurs cales de compensation dont la surface inclinée, opposée à celle collée sur le vitrage, est orientée pour accoster la feuillure parallèlement ou sensiblement parallèlement à celle-ci.

Conformément à un premier mode de réalisation, on dispose une cale de compensation sur toute la bordure du vitrage qui est destinée à venir s'appliquer contre la feuillure.

Conformément à un second mode de réalisation, on dispose une ou plusieurs cales de compensation, chacune dans une région de la bordure du vitrage où une compensation est nécessaire compte tenu de la forme du vitrage.

Conformément à une caractéristique particulière de l'invention, on utilise une ou plusieurs cales de compensation dont la surface de base, destinée à venir en contact avec le vitrage présente au moins une nervure ou un bossage ou similaire constituant un point d'appui sur le vitrage et déterminant une hauteur minimale de colle pour la liaison vitrage-cale.

Conformément à une autre caractéristique particulière de l'invention, l'angle α entre la surface intérieure du vitrage et la direction d'apport du vitrage est supérieur à 35° sur au moins une portion de vitrage comportant une cale de compensation.

La présente invention porte également sur une cale de compensation pour la mise en oeuvre du procédé tel que défini ci-dessus et qui présente au moins une surface de base destinée à être disposée en vis-à-vis d'une surface intérieure dudit vitrage et une surface inclinée, orientée selon un angle β non nul par rapport à la surface de base, l'angle β entre une surface de base et une surface inclinée de la cale de compensation variant sur la longueur de la cale de compensation d'une valeur proche de 0° à une première extrémité de la cale jusqu'à une valeur βₘ pour revenir à une valeur proche de 0° à une seconde extrémité, opposé à la première selon la longueur de la cale de compensation. La cale peut, bien sûr comporter d'autres surfaces que les deux surfaces qui viennent d'être mentionnées et notamment au moins une surface complémentaire, liant la surface de base à la surface inclinée.

L'angle β entre la surface de base et la surface inclinée est ainsi compris entre 0° et 180° en excluant ces valeurs pour permettre à la cale de compensation de s'adapter à la différence d'orientation entre la surface intérieure du vitrage et la surface de la feuillure. Il faut comprendre de la phrase précédente que l'angle β entre la surface de base et la surface inclinée effectivement mesurée sur la cale peut être de 0° ou 180°, mais que pour ces valeurs, il n'y a pas, à proprement parlé, de compensation.

En particulier, pour toutes les valeurs de β ≥ à 90°, il est possible d'envisager que la feuillure ne soit par orientée vers l'extérieur du véhicule, mais vers l'intérieur.

La valeur maximale de l'angle β (βₘ) est selon l'invention bien supérieure à 0° et est en particulier d'au moins 10°, voire d'au moins 20 °, et en général d'environ 30° ou 35°.

Conformément à une première variante, la cale de compensation consiste en une pièce pleine, sans vide intérieur ; c'est-à-dire dont la surface de base et la surface inclinée sont reliées par au moins une, voire plusieurs, autre(s) surface(s).

Conformément à une seconde variante, la cale de compensation consiste en une pièce de section en forme de V, dont l'une des ailes constitue la surface de base et est destinée à être collée sur le vitrage et dont l'autre aile constitue la surface inclinée et est destinée à venir s'appliquer contre la feuillure.

Cette forme en V présente l'avantage de présenter un faible encombrement et de nécessiter moins de matière ; elle est donc moins coûteuse et plus légère qu'une forme pleine.

L'angle entre la surface de base et la surface inclinée de la cale peut varier sur sa longueur d'une valeur proche de 0° et > 0° à une première extrémité de la cale jusqu'à une valeur maximale βₘ pour revenir à une valeur proche de 0° et > 0° à une seconde extrémité, opposé à la première selon la partie la plus longue de la cale de compensation, pour permettre à la cale de compensation de s'adapter à la différence d'orientation entre la surface intérieure du vitrage et la surface de la feuillure sur toute sa longueur et d'être toujours appliquée contre ces surfaces pour assurer la liaison mécanique du vitrage sur la feuillure et l'étanchéité de cette liaison. La cale de compensation est avantageusement formée pour présenter des extrémités longitudinales aplaties afin d'assurer une continuité du cordon de collage sans dénivellation substantielle auxdites extrémités.

Cet angle β est, de préférence, proche de 0° à deux extrémités de la cale selon sa partie la plus longue et est proche de 35° en son milieu.

Toutefois, la valeur maximale βₘ n'est pas forcément mesurée au milieu de la longueur de la cale de compensation.

Par ailleurs, la cale de compensation selon la présente invention peut comporter, sur sa surface de base destinée à coopérer avec le vitrage, au moins une nervure ou un bossage ou similaire constituant un point d'appui sur le vitrage et déterminant une hauteur minimale de colle pour la liaison structurale vitrage-cale.

Elle peut aussi comporter au moins une nervure ou similaire de renforcement de la résistance de la liaison structurale vitrage-feuillure.

Elle peut être faite d'une matière métallique telle que l'aluminium, ou encore être faite d'une matière plastique moulée, par exemple par injection, ladite matière plastique pouvant être renforcée par des fibres. Lorsqu'elle est en matière plastique, sa rigidité est telle qu'elle présente un module d'élasticité de l'ordre de 5 à 15 GPa.

On peut prévoir également que la cale de compensation porte au moins un moyen supplémentaire, par exemple venu de moulage, destiné à une autre fonction, tel qu'un repère ou une encoche apte à faciliter la mise en place correcte du vitrage dans la baie de la carrosserie, ou tel qu'un élément de fixation pour un dispositif rapporté comme par exemple une garniture, un faisceau électrique, ou autre.

La présente invention porte également sur un vitrage de véhicule, tel qu'un pare-brise, comportant au moins une cale de compensation présentant au moins une surface de base disposée en vis-à-vis d'une surface intérieure dudit vitrage et une surface inclinée, orientée selon un angle β non nul par rapport à la surface de base.

Cet angle β est variable sur a longueur de la cale et varie d'une valeur proche de 0° et > 0° jusqu'à β pour revenir à une valeur proche de 0° et > 0°.

Cet angle β est, de préférence, proche de 0° à deux extrémités de la cale et est proche de 35° en son milieu.

Toutefois, la valeur maximale βₘ n'est pas forcément mesurée au milieu de la longueur de la cale de compensation.

La, ou chaque, cale de compensation est, de préférence, collée au moins par sa surface de base à la surface intérieure dudit vitrage à l'aide de plots de collage.

La ou les cales sont disposées en particulier aux bords du vitrage destinés à coopérer avec le feuillure de la baie que le vitrage va fermer, là où l'angle α entre la surface intérieure du vitrage et le plan moyen du vitrage est supérieur à 35°.

Ainsi, l'angle α entre la surface intérieure du vitrage et le plan moyen du vitrage est, de préférence, supérieur à 35° sur au moins une portion de vitrage comportant une cale de compensation.

La ou les cales sont, de préférence, disposées de telle sorte que le bord extérieur de la surface de base soit sensiblement parallèle au bord périphérique du vitrage et même de préférence encore confondu avec le bord périphérique du vitrage.

La présente invention porte également sur un vitrage équipé d'au moins une cale de compensation telle que définie précédemment.

Ce vitrage peut ainsi être pourvu d'une cale de compensation consistant en une pièce de section en forme de V, dont l'une des ailes est collée sur le vitrage et dont l'autre aile est collée contre la feuillure. La région de jonction des deux ailes où la distance entre elles est la plus petite est alors, de préférence, disposée vers la périphérie du vitrage.

Le vitrage peut en outre être muni d'un empilement de couches minces destiné à lui conférer des propriétés de protection solaire et en particulier des propriétés de contrôle solaire, afin de permettre de limiter la pénétration du rayonnement solaire à l'intérieur de l'habitacle.

Puisque l'invention est destinée en particulier aux pare-brises panoramiques feuilletés présentant au moins une forte courbure en partie supérieure et/ou au moins deux fortes courbures sur les côté, il est préférable d'utiliser une technique de dépôt de couche minces qui est mise en oeuvre avant le bombage du vitrage. La pulvérisation cathodique sous vide assistée par champ magnétique est une technique particulièrement avantageuse pour opérer ce type de dépôt.

L'invention porte également sur un véhicule équipé d'au moins un vitrage selon l'invention monté selon le procédé de l'invention, notamment d'un pare-brise selon l'invention et en particulier un pare-brise feuilleté panoramique selon l'invention, monté selon le procédé de l'invention.

Pour mieux illustrer l'objet de la présente invention, on va maintenant en décrire des modes de réalisation particuliers avec référence aux dessins annexés.

Sur ces dessins :
- la Figure 1 est une vue schématique en coupe horizontale d'un pare-brise de véhicule en position d'assemblage par collage sur la feuillure de réception dudit pare-brise, conformément à l'état antérieur de la technique ;
- les Figures 2A, 2B et 2C sont des vues du détail D de la Figure 1, représentant l'évolution de la forme du cordon de collage lors de l'assemblage du pare-brise ;
- la Figure 3 est une vue analogue à la Figure 1, suivant laquelle, conformément à la présente invention, le pare-brise est équipé d'une cale de compensation permettant un accostage correct du pare-brise sur la feuillure ;
- la Figure 4 est une vue du détail D' de la Figure 3, montrant la liaison correcte du pare-brise équipé de la cale de compensation et de la feuillure du véhicule ;
- la Figure 5 est une vue en perspective d'un pare-brise équipé d'une cale de compensation selon la présente invention, ladite cale étant vue à travers le pare-brise ;
- la Figure 6 est une vue de dessus de la cale de compensation des Figures, posée sur son côté destiné à coopérer avec le pare-brise ;
- la Figure 7 est une vue en coupe transversale selon VII-VII de la Figure 5 ; et
- la Figure 8 est une vue de côté schématique selon la flèche F de la Figure 3 montrant la cale de compensation montée avec ses trois principaux points d'appui sur le pare-brise.

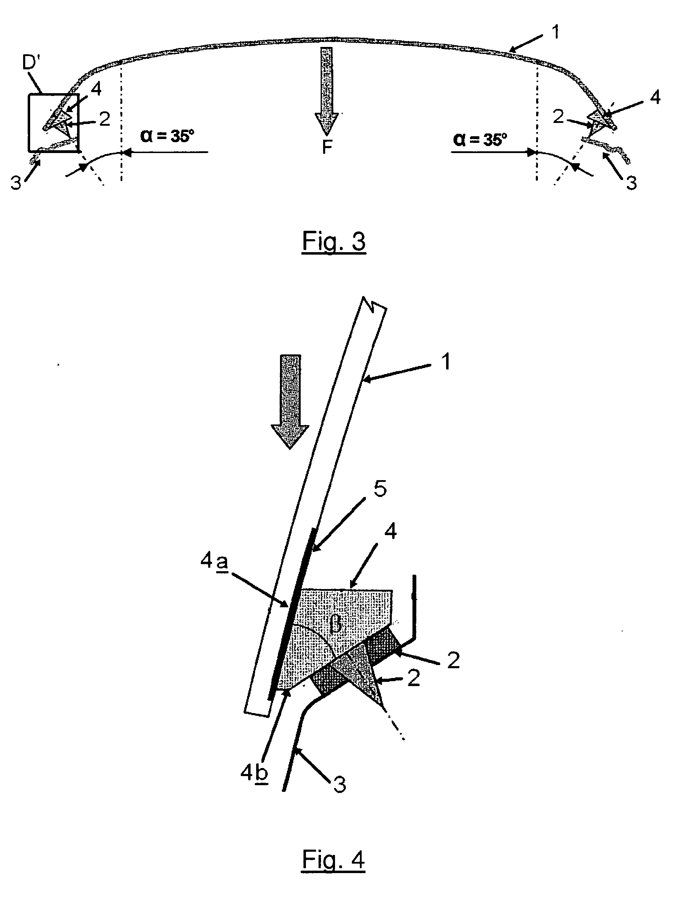

Si l'on se réfère à la Figure 3, on peut voir que l'on a représenté schématiquement un vitrage 1 de véhicule qui est ici un pare-brise feuilleté panoramique présentant deux retours sur les côtés et qui est équipé de deux cales de compensation 4, ledit vitrage étant en position d'assemblage par collage sur la feuillure 3 de la carrosserie. Le pare-brise est apporté et assemblé sur la feuillure 3 suivant la direction de la flèche F indiquée sur la Figure 3 qui est ici dans un plan horizontal. Chaque cale de compensation 4 est ici une pièce en matière plastique moulée, en polyamide ou en polybutylène terephtalate, qui comporte une surface de base 4a collée sur le pare-brise et une surface inclinée 4b, opposée à la surface de base 4a et destinée à recevoir le cordon de colle 2, en étant orientée de telle sorte que l'accostage de feuillure 3 par le pare-brise 1 s'effectue sensiblement parallèlement à ladite feuillure 3 au niveau de chaque cale de compensation.

Comme on peut le voir sur la Figure 4, le cordon de colle 2 n'est alors ni déformé, ni cisaillé ni tordu lors de cet accostage ; il est correctement aplati sur la feuillure 3. Est ainsi garanti un collage correct du pare-brise sur la feuillure 3, ce qui permet une bonne étanchéité du collage et une rigidité de la structure formée par l'ensemble carrosserie - pare-brise.

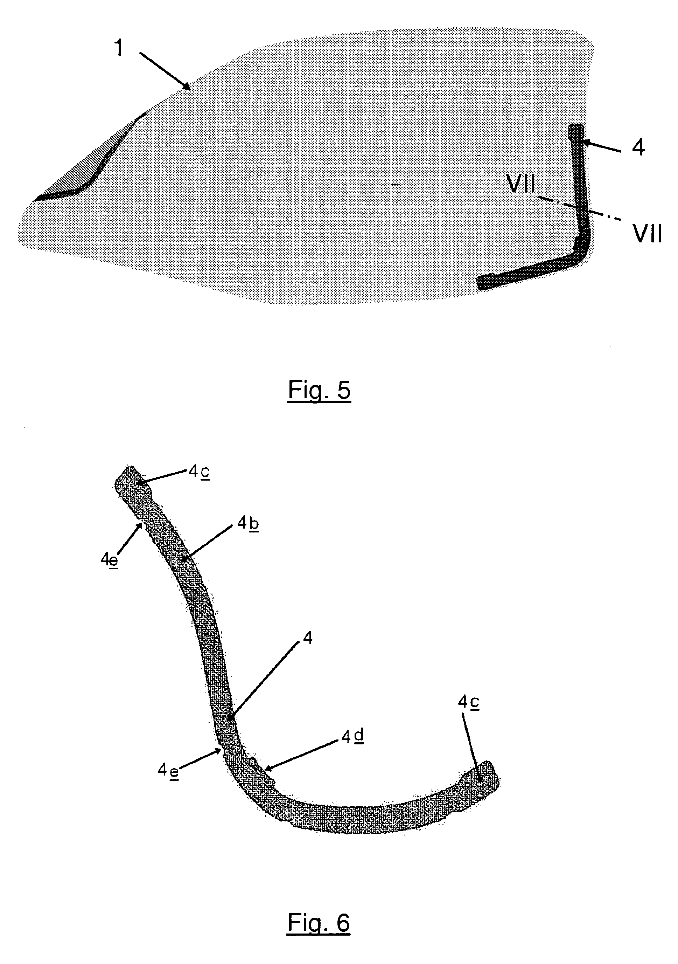

Sur la Figure 5, on a représenté une cale de compensation 4 en position sur un côté latéral d'un pare-brise, la cale de compensation 4 étant vue par transparence à travers le pare-brise. Une seule cale de compensation 4 a été représentée, mais, en réalité, une même cale de compensation 4 sera présente de l'autre côté du pare-brise 1, de façon symétrique. Dans cet exemple, les cales de compensation 4 ne sont présentes que sur les parties de la périphérie du pare-brise qui nécessitent une compensation, c'est-à-dire que dans les parties où l'angle α entre la surface intérieure du vitrage et le plan moyen du vitrage est supérieur à 35 ; c'est-à-dire aussi où l'angle α entre la surface intérieure du vitrage et la direction d'apport F du vitrage est supérieur à 35°.

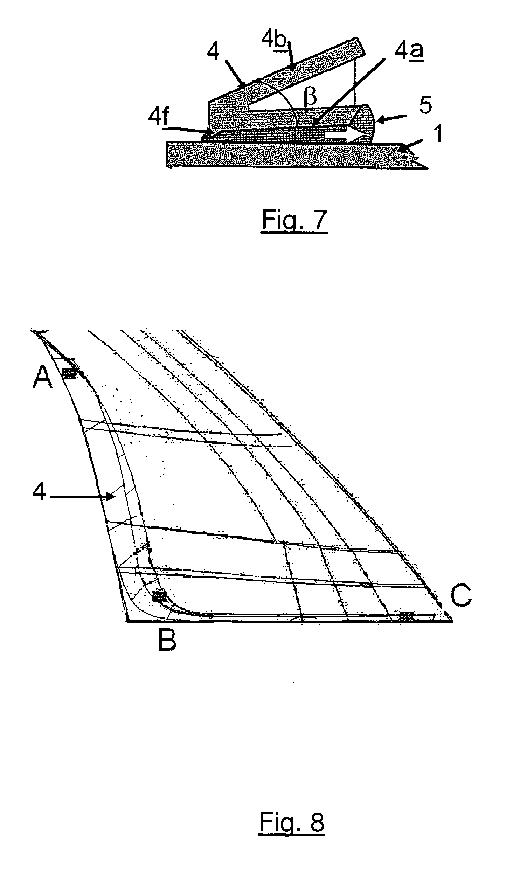

Sur la Figure 6, on peut voir que l'on a représenté, en vue de dessus, la cale de compensation 4 de la Figure 5. Cette cale de compensation 4 présente, en coupe transversale, la forme d'un V, dont l'aile formant la surface de base 4a est destinée à être collée par des plots de colle 5 (Figure 7) par exemple à base de polyuréthane, contre le pare-brise, et l'autre aile, celle formant la surface inclinée 4b, est destinée à être collée contre la feuillure 3 par le cordon de colle 2, par exemple aussi à base de polyuréthane. L'angle d'ouverture β entre les deux ailes varie progressivement : il augmente jusqu'à une valeur proche de 35 ° au milieu de la cale puis diminue à nouveau progressivement ; aux extrémités longitudinales 4c de la cale, les deux ailes s'aplatissent l'une sur l'autre pour permettre d'assurer la continuité du cordon de collage 2, nécessaire à la bonne étanchéité du collage entre pare-brise et feuillure 3. La cale de compensation 4 présente ainsi à ses extrémités longitudinales 4c une épaisseur d'au maximum 2 mm et de préférence d'environ 1 mm. A ses extrémités longitudinales 4c, l'angle β entre les deux ailes se rapproche de zéro, voire même atteint cette valeur, c'est-à-dire que les deux ailes peuvent se retrouver parallèles sur une portion réduite, aux extrémités longitudinales 4c.

Les plots de colle 5 présentent quant à eux une épaisseur d'environ 0,5 mm sous la cale.

La cale de compensation 4 présente également dans la partie centrale de son aile destinée à venir en contact avec la feuillure 3 un prolongement formant une patte 4d, destinée à assurer un contact mécanique supplémentaire avec ladite feuillure 3. La cale 4 présente également, le long de sa bordure externe, des échancrures 4e, dont le rôle est d'aider au positionnement.

La largeur des surfaces 4a et 4b est ici de l'ordre de 20 mm et 25 mm au niveau des pattes 4d, mais il pourrait être envisagé de réaliser, par exemple, la surface de base 4a plus large que la surface inclinée 4b.

La forme générale des cales suit sensiblement la forme de la périphérie du vitrage de sorte que le bord extérieur de la surface de base 4a qui est ici confondu avec la ligne de liaison entre les surfaces 4a et 4b de la forme en V, soit sensiblement parallèle au bord périphérique du vitrage, comme visible sur la figure 8.

Sur la Figure 7, on peut voir que l'on a représenté une coupe transversale de la cale de compensation 4 posée sur le pare-brise. On peut voir sur cette figure que des nervures 4f sont présentes en bordure de la surface de base 4a de la cale de compensation 4 collée au pare-brise, près de la ligne de jonction entre les surfaces 4a et 4b. Ces nervures 4f, espacées à intervalles réguliers et situées du côté de la périphérie du vitrage, sont destinées à garantir une certaine épaisseur des plots de colle 5 entre la cale de compensation 4 et le pare-brise, afin d'assurer un bon collage. Les nervures 4f permettent également une évacuation de colle vers l'intérieur du vitrage, et donc un débordement de la colle située entre la vitrage et la cale 4. Ce débordement de colle garantit l'étanchéité du collage.

Si l'on se réfère à la Figure 8, on peut voir les différents points de collage de la cale de compensation 4 sur le pare-brise 1. Il y a trois points de collage principaux A, B, C, correspondant aux emplacements des nervures 4f mentionnées ci-dessus.

Le reste du pare-brise, là où il n'y a pas de cale de compensation, est collé directement sur la feuillure 3, comme pour les pare-brise de l'état antérieur de la technique.

Cette colle du cordon de colle 2 présente ici un module de résistance au cisaillement de l'ordre de 5 MPa et il a été calculé que l'effort de cisaillement transmis au cordon de colle lors du collage du vitrage dans la baie de la carrosserie est environ 100 fois inférieur à ce module lorsque l'angle β est d'environ 30 °.

Le démontage d'un pare-brise équipé d'une (ou de) cale(s) de compensation 4 selon la présente invention est aisé. Il est ainsi possible de passer un câble de démontage du pare-brise passe à travers le cordon de collage 2, comme pour des pare-brise de l'état antérieur de la technique, entre la feuillure 3 et la (ou les) cale(s) de compensation 4. Ainsi, la présence de la (ou des) cale(s) de compensation n'empêche pas le démontage de pare-brise, lequel peut s'effectuer de façon classique et sans endommager l'intégrité du vitrage muni de sa (ou de ses) cale(s), afin de permettre le cas échéant le remontage du pare-brise.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Procédé d'assemblage par collage d'un vitrage de véhicule (1) sur un support, en particulier d'un pare-brise sur une carrosserie de véhicule, procédé suivant lequel on dépose un cordon de colle (2) sur la partie périphérique du vitrage (1) destinée à être collée sur une feuillure (3) de réception formée par ledit support, on apporte ledit vitrage (1), sensiblement perpendiculairement à son plan moyen, contre ladite feuillure (3) et on presse pour réaliser le collage, procédé suivant lequel, avant de disposer le cordon de colle (2) en périphérie du vitrage (1), on dispose sur celui-ci une cale de compensation (4) laquelle reçoit le cordon de colle (2), ladite cale de compensation (4) présentant au moins une surface de base (4a) disposée en vis-à-vis d'une surface intérieure dudit vitrage et une surface inclinée (4b), orientée selon un angle β non nul par rapport à la surface de base (4a), cet angle étant variable et variant selon la longueur de la cale de compensation (4) d'une valeur proche de 0° à une première extrémité (4c) de la cale jusqu'à une valeur βₘ pour revenir à une valeur proche de 0° à une seconde extrémité (4c) opposé à la première selon la longueur de la cale de compensation.

2. Procédé selon la revendication 1, **caractérisé par le fait que** l'on dispose une ou plusieurs cales de compensation (4) dont la surface inclinée (4b) est orientée pour accoster la feuillure (3) parallèlement ou sensiblement parallèlement à celle-ci.

3. Procédé selon l'une des revendications 1 et 2, **caractérisé par le fait que** l'on dispose une cale de compensation (4) sur toute la bordure du vitrage (1) qui est destinée à venir s'appliquer contre la feuillure (3).

4. Procédé selon l'une des revendications 1 et 2, **caractérisé par le fait que** l'on dispose une ou plusieurs cales de compensation (4), chacune dans une région de la bordure du vitrage (1) où une compensation est nécessaire compte tenu de la forme du vitrage (1).

5. Procédé selon l'une des revendications 1 à 4, **caractérisé par le fait qu'**au moins une cale de compensation (4) est collée en périphérie du vitrage (1) avant de disposer le cordon de colle (2).

6. Procédé selon l'une des revendications 1 à 5, **caractérisé par le fait que** l'on utilise une ou plusieurs cales de compensation (4) dont la surface (4a) destinée à venir en contact avec le vitrage (1) présente au moins une nervure (4f) ou un bossage ou similaire constituant un point d'appui sur le vitrage (1) et déterminant une hauteur minimale de colle pour la liaison vitrage-cale.

7. Procédé selon l'une des revendications 1 à 6, **caractérisé par le fait que** l'angle α entre la surface intérieure du vitrage et la direction d'apport du vitrage est supérieur à 35° sur au moins une portion de vitrage comportant une cale de compensation (4).

8. Cale de compensation (4) pour la mise en oeuvre du procédé tel que défini à l'une des revendications 1 à 7, cale présentant au moins une surface de base (4a) apte à être disposée en vis-à-vis d'une surface intérieure d'un vitrage et une surface inclinée (4b), orientée selon un angle β non nul par rapport à la surface de base, l'angle β entre ladite surface de base (4a) et ladite surface inclinée (4b) de la cale de compensation (4) variant sur la longueur de la cale de compensation (4) d'une valeur proche de 0° à une première extrémité (4c) de la cale jusqu'à une valeur βₘ pour revenir à une valeur proche de 0° à une seconde extrémité (4c) opposé à la première selon la longueur de la cale de compensation.

9. Cale de compensation selon la revendication 8, **caractérisée par le fait qu'**elle consiste en une pièce pleine.

10. Cale de compensation selon la revendication 8, **caractérisée par le fait qu'**elle consiste en une pièce de section en forme de V, dont l'une des ailes est destinée à être collée sur le vitrage (1) et dont l'autre aile est destinée à venir s'appliquer contre la feuillure (3).

11. Cale de compensation selon l'une des revendications 8 à 12, **caractérisée par le fait que** ledit angle β est proche de 0° auxdites deux extrémités (4c) de la cale et est proche de 35 ° en son milieu.

12. Cale de compensation selon la revendication précédente, **caractérisée par le fait que** lesdites extrémités longitudinales (4c) de la cale sont aplaties afin d'assurer une continuité du cordon de collage (2) sans dénivellation auxdites extrémités (4c).

13. Cale de compensation selon l'une des revendications 8 à 12, **caractérisée par le fait qu'**elle comporte, sur sa surface de base (4a) destinée à coopérer avec le vitrage (1), au moins une nervure (4f) ou un bossage ou similaire constituant un point d'appui sur le vitrage (1) et déterminant une hauteur minimale de colle pour la liaison structurale vitrage-cale.

14. Cale de compensation selon l'une des revendications 8 à 13, **caractérisée par le fait qu'**elle comporte au moins une nervure ou similaire de renforcement de la résistance de la liaison structurale vitrage-feuillure.

15. Cale de compensation selon l'une des revendications 8 à 14, **caractérisée par le fait qu'**elle est faite d'une matière métallique telle que l'aluminium ou est faite d'une matière plastique moulée, par exemple par injection, ladite matière plastique pouvant être renforcée par des fibres.

16. Cale de compensation selon l'une des revendications 8 à 15, **caractérisée par le fait qu'**elle comporte au moins un moyen supplémentaire, par exemple venu de moulage, destiné à une autre fonction, tel qu'un repère ou une encoche, ou tel qu'un élément de fixation pour un dispositif rapporté.

17. Vitrage (1) de véhicule, tel que pare-brise, comportant au moins une cale de compensation (4) telle que définie à l'une des revendications 8 à 16, présentant au moins une surface de base (4a) disposée en vis-à-vis d'une surface intérieure dudit vitrage et une surface inclinée (4b), orientée selon un angle β non nul par rapport à la surface de base (4a), cet angle étant variable et variant selon la longueur de la cale de compensation (4) d'une valeur proche de 0' à une première extrémité (4c) de la cale jusqu'à une valeur βₘ pour revenir à une valeur proche de 0° à une seconde extrémité (4c) opposé à la première selon la longueur de la cale de compensation.

18. vitrage (1) selon la revendication 17, **caractérisé en ce que** ledit angle β est proche de 0 ° à deux extrémités de la cale et est proche de 35 ° en son milieu.

19. vitrage (1) selon l'une des revendications 17 ou 18, **caractérisé en ce que** ladite cale de compensation (4) est collée au moins par sa surface de base (4a) à la surface intérieure dudit vitrage à l'aide de plots de collage (5).

20. vitrage (1) selon l'une des revendications 17 à 19, **caractérisé en ce que** l'angle α entre la surface intérieure du vitrage et le plan moyen du vitrage est supérieur à 35° sur au moins une portion de vitrage comportant une cale de compensation (4).

21. vitrage (1) selon l'une des revendications 17 à 20, **caractérisé en ce que** le bord extérieur de la surface de base (4a) est sensiblement parallèle au bord périphérique du vitrage.

22. vitrage (1) selon l'une des revendications 17 à 21, **caractérisé en ce qu'**une cale de compensation (4) consiste en une pièce de section en forme de V, dont l'une des ailes est collée sur le vitrage (1) et dont l'autre aile est collée contre la feuillure (3), la région de jonction des deux ailes où la distance entre elles est la plus petite étant disposée vers la périphérie du vitrage (1).

23. Véhicule équipé d'au moins un vitrage (1) assemblé par le procédé selon l'une des revendications 1 à 7 ou d'un vitrage (1) selon l'une des revendications 17 à 22.

## Claims

1. A method of assembling a vehicle window glazing (1) with a support, particularly a windshield with a vehicle bodywork, by adhesive bonding, in which method a bead of adhesive (2) is applied to the peripheral part of the glazing (1) intended to be bonded to an accommodating rebate (3) formed by said support, said glazing (1) is offered up, substantially perpendicular to its average plane, to said rebate (3) and pressure is applied in order to bond it in place, method according to which before the bead of adhesive (2) is applied to the periphery of the glazing (1) a compensating packing piece (4) that accepts the bead of adhesive (2) is applied to this glazing, said compensating packing piece (4) having at least one base surface (4a) positioned facing an interior surface of said glazing and an inclined surface (4b) directed at a non-zero angle β with respect to the base surface (4a), this angle being variable and varying along the length of the compensating packing piece (4) from a value close to 0° at a first end (4c) of the packing piece to a value βₘ, returning to a value close to 0° at a second end (4c), the opposite end to the first along the length of the compensating packing piece.

2. The method as claimed in claim 1, **characterized in that** one or more compensating packing pieces (4) the inclined surfaces (4b) of which are directed in such a way as to mate with the rebate (3) parallel or substantially parallel thereto are fitted.

3. The method as claimed in one of claims 1 and 2, **characterized in that** a compensating packing piece (4) is fitted to the entire border of the glazing (1) which is intended to rest against the rebate (3).

4. The method as claimed in one of claims 1 and 2, **characterized in that** one or more compensating packing pieces (4) are fitted, each to a region of the border of the glazing (1) where compensation is needed given the shape of the glazing (1).

5. The method as claimed in one of claims 1 to 4, **characterized in that** at least one compensating packing piece (4) is bonded to the periphery of the glazing (1) before the bead of adhesive (2) is applied.

6. The method as claimed in one of claims 1 to 5, **characterized in that** use is made of one or more compensating packing piece(s) (4) of which the surface (4a) intended to come into contact with the glazing (1) has at least one rib (4f) or boss or the like constituting a point of contact with the glazing (1) and determining a minimum height of adhesive for the glazing/packing-piece connection.

7. The method as claimed in one of claims 1 to 6, **characterized in that** the angle α between the interior surface of the glazing and the direction in which the glazing is offered up is greater than 35° over at least a portion of the glazing comprising a compensating packing piece (4).

8. A compensating packing piece (4) for implementing the method as defined in one of claims 1 to 7, packing piece having at least a base surface (4a) able to be disposed in face to the interior surface of a glazing and an inclined surface (4b) directed at a non-zero angle β with respect to the base surface (4a)the angle β between said base surface (4a) and said inclined surface (4b) of the compensating packing piece (4) varing along the length of the compensating packing piece (4) from a value close to 0° at a first end (4c) of the packing piece to a value βₘ, returning to a value close to 0° at a second end (4c), the opposite end to the first along the length of the compensating packing piece.

9. The compensating packing piece as claimed in claim 8, **characterized in that** it consists of a solid piece.

10. The compensating packing piece as claimed in claim 8, **characterized in that** it consists of a piece of V-shaped cross section, one of the arms of which is intended to be bonded to the glazing (1) and the other arm of which is intended to be pressed against the rebate (3).

11. The compensating packing piece as claimed in one of claims 8 to 12, **characterized in that** said angle β is close to 0° at said ends (4e) of the packing piece and is close to 35° at its middle.

12. The compensating packing piece as claimed in the preceding claim, **characterized in that** said longitudinal ends (4c) are flattened so as to ensure continuity of the bead of adhesive (2) without any change of level at said ends (4c).

13. The compensating packing piece as claimed in one of claims 8 to 12, **characterized in that** it comprises, on its base surface (4a) intended to collaborate with the glazing (1), at least one rib (4f) or boss or the like constituting a point of contact with the glazing (1) and determining a minimum height of adhesive for the structural glazing/packing-piece connection.

14. The compensating packing piece as claimed in one of claims 8 to 13, **characterized in that** it comprises at least one rib or the like to strengthen the structural glazing/rebate connection.

15. The compensating packing piece as claimed in one of claims 8 to 14, **characterized in that** it is made of a metallic material such as aluminum or is made of a molded, for example injection-molded, plastic, it being possible for said plastic to be a fiber-reinforced plastic.

16. The compensating packing piece as claimed in one of claims 8 to 15, **characterized in that** it comprises at least one additional means, for example one molded or cast into it, intended to perform another function, for example to act as a reference or a notch, or such as a fixing element for an attached device.

17. A vehicle glazing (1), such as a windshield, comprising at least one compensating packing piece (4), as defined in one of claims 8 to 16, having at least one base surface (4a) positioned facing an interior surface of said glazing and an inclined surface (4b) directed at a non-zero angle P with respect to the base surface (4a), this angle being variable and varying along the length of the compensating packing piece (4) from a value close to 0° at a first end (4c) of the packing piece to a value βₘ, returning to a value close to 0° at a second end (4c), the opposite end to the first along the length of the compensating packing piece.

18. The glazing (1) as claimed in claim 17, **characterized in that** said angle β is close to 0° at two ends of the packing piece and is close to 35° at its middle.

19. The glazing (1) as claimed in one of claims 17 or 18, **characterized in that** said compensating packing piece (4) is bonded at least via its base surface (4a) onto the interior surface of said glazing using adhesive-bonding patches (5).

20. The glazing (1) as claimed in one of claims 17 to 19, **characterized in that** the angle α between the interior surface of the glazing and the average plane of the glazing is greater than 35° over at least a portion of the glazing comprising a compensating packing piece (4).

21. The glazing (1) as claimed in one of claims 17 to 20, **characterized in that** the exterior edge of the base surface (4a) is substantially parallel to the peripheral edge of the glazing.

22. The glazing (1) as claimed in one of claims 17 to 21, **characterized in that** a compensating packing piece (4) consists of a piece of V-shaped cross section, one of the arms of which is bonded to the glazing (1) and the other arm of which is bonded against the rebate (3), the region at which the two arms meet, where the distance between them is the shortest, being positioned toward the periphery of the glazing (1).

23. A vehicle equipped with at least one glazing (1) assembled by the method as claimed in one of claims 1 to 7 or with a glazing (1) as claimed in one of claims 17 to 22.

## Patentansprüche

1. Verfahren zum Montieren einer Fahrzeugscheibe (1) an einem Träger, insbesondere einer Windschutzscheibe an einer Fahrzeugkarosserie, durch Festkleben, Verfahren, wonach auf dem Umfangsteil der Scheibe (1), der dazu bestimmt ist, an einen durch den Träger gebildeten Aufnahmefalz (3) geklebt zu werden, ein Klebestoffstrang (2) aufgebracht wird, die Scheibe (1) im Wesentlichen senkrecht zu ihrer Mittelebene an den Falz (3) angelegt wird und Druck ausgeübt wird, um das Festkleben zu bewirken, Verfahren, wonach vor dem Anordnen des Klebstoffstrangs (2) am Umfang der Scheibe (1) an dieser ein Ausgleichskeil (4) angeordnet wird, der den Klebstoffstrang (2) aufnimmt, wobei der Ausgleichskeil (4) wenigstens eine Grundfläche (4a), die gegenüber einer Innenseite der Scheibe angeordnet ist, und eine geneigte Fläche (4b), die unter einem Winkel β ungleich null gegenüber der Grundfläche (4a) ausgerichtet ist, aufweist, wobei dieser Winkel variabel ist und entlang der Länge des Ausgleichskeils (4) von einem Wert nahe 0° an einem ersten Ende (4c) des Keils bis zu einem Wert βₘ variiert, um an einem dem ersten gegenüberliegenden zweiten Ende (4c) entlang der Länge des Ausgleichskeils wieder auf einen Wert nahe 0° zu kommen.

2. Verfahren nach Anspruch 1, **dadurch gekennzeichnet, dass** ein oder mehrere Ausgleichskeile (4) angeordnet werden, deren geneigte Fläche (4b) ausgerichtet ist, um an dem Falz (3) parallel oder im Wesentlichen parallel zu diesem in Anlage zu kommen.

3. Verfahren nach einem der Ansprüche 1 und 2, **dadurch gekennzeichnet, dass** ein Ausgleichskeil (4) über den ganzen Rand der Scheibe (1), der dazu bestimmt ist, an dem Falz (3) angelegt zu werden, angeordnet wird.

4. Verfahren nach einem der Ansprüche 1 und 2, **dadurch gekennzeichnet, dass** ein oder mehrere Ausgleichskeile (4) angeordnet werden, ein jeder in einem Bereich des Randes der Scheibe (1), in dem ein Ausgleichen aufgrund der Form der Scheibe (1) erforderlich ist.

5. Verfahren nach einem der Ansprüche 1 bis 4, **dadurch gekennzeichnet, dass** wenigstens ein Ausgleichskeil (4) am Umfang der Scheibe (1) vor Anordnen des Klebestoffstrangs (2) angeklebt wird.

6. Verfahren nach einem der Ansprüche 1 bis 5, **dadurch gekennzeichnet, dass** ein oder mehrere Ausgleichskeile (4) verwendet werden, deren Fläche (4a), die dazu bestimmt ist, mit der Scheibe (1) in Kontakt zu kommen, wenigstens eine Rippe (4f) oder einen Buckel oder dergleichen aufweist, die bzw. der eine Auflagestelle auf der Scheibe (1) bildet und eine minimale Klebstoffhöhe für die Scheibe-Keil-Verbindung begrenzt.

7. Verfahren nach einem der Ansprüche 1 bis 6, **dadurch gekennzeichnet, dass** der Winkel α zwischen der Innenseite der Scheibe und der Richtung des Anlegens der Scheibe an wenigstens einem Scheibenabschnitt, der einen Ausgleichskeil (4) umfasst, größer als 35° ist.

8. Ausgleichskeil (4) für die Durchführung des Verfahrens, wie es in einem der Ansprüche 1 bis 7 definiert ist, Keil, der wenigstens eine Grundfläche (4a), welche geeignet ist, gegenüber einer Innenseite einer Scheibe angeordnet zu werden, und eine geneigte Fläche (4b), die unter einem Winkel β ungleich null gegenüber der Grundfläche ausgerichtet ist, aufweist, wobei der Winkel β zwischen der Grundfläche (4a) und der geneigten Fläche (4b) des Ausgleichskeils (4) über die Länge des Ausgleichskeils (4) von einem Wert nahe 0° an einem ersten Ende (4c) des Keils bis zu einem Wert βₘ variiert, um an einem dem ersten gegenüberliegenden zweiten Ende (4c) entlang der Länge des Ausgleichskeils wieder auf einen Wert nahe 0° zu kommen.

9. Ausgleichskeil nach Anspruch 8, **dadurch gekennzeichnet, dass** er aus einem massiven Teil besteht.

10. Ausgleichskeil nach Anspruch 8, **dadurch gekennzeichnet, dass** er aus einem Teil mit V-förmigem Querschnitt besteht, dessen einer Schenkel dazu bestimmt ist, auf die Scheibe (1) geklebt zu werden und dessen anderer Schenkel dazu bestimmt ist, an den Falz (3) angelegt zu werden.

11. Ausgleichskeil nach einem der Ansprüche 8 bis 12, **dadurch gekennzeichnet, dass** der Winkel β an den beiden Enden (4c) des Keils nahe 0° und in dessen Mitte nahe 35° ist.

12. Ausgleichskeil nach dem vorstehenden Anspruch, **dadurch gekennzeichnet, dass** die Längsenden (4c) des Keils abgeflacht sind, um eine Kontinuität des Klebstoffstrangs (2) ohne Höhenunterschied an den Enden (4c) sicherzustellen.

13. Ausgleichskeil nach einem der Ansprüche 8 bis 12, **dadurch gekennzeichnet, dass** er auf seiner Grundfläche (4a), die dazu bestimmt ist, mit der Scheibe (1) zusammenzuwirken, wenigstens eine Rippe (4f) oder einen Buckel oder dergleichen aufweist, die bzw. der eine Auflagestelle auf der Scheibe (1) bildet und eine minimale Klebstoffhöhe für die Scheibe-Keil-Strukturverbindung begrenzt.

14. Ausgleichskeil nach einem der Ansprüche 8 bis 13, **dadurch gekennzeichnet, dass** er wenigstens einen Rippe oder dergleichen zur Verstärkung der Festigkeit der Scheibe-Falz-Strukturverbindung umfasst.

15. Ausgleichskeil nach einem der Ansprüche 8 bis 14, **dadurch gekennzeichnet, dass** er aus einem metallischen Material, wie Aluminium, oder aus einem gegossenen, beispielsweise spritzgegossenen Kunststoff gefertigt ist, wobei der Kunststoff faserverstärkt sein kann.

16. Ausgleichskeil nach einem der Ansprüche 8 bis 15, **dadurch gekennzeichnet, dass** er wenigstens ein zusätzliches, beispielsweise angeformtes Mittel umfasst, das für eine andere Funktion bestimmt ist, wie eine Markierung oder eine Nut oder wie ein Befestigungselement für eine angesetzte Vorrichtung.

17. Fahrzeugscheibe (1), wie eine Windschutzscheibe, umfassend wenigstens einen Ausgleichskeil (4) wie er in einem der Ansprüche 8 bis 16 definiert ist, der wenigstens eine Grundfläche (4a), die gegenüber einer Innenseite der Scheibe angeordnet ist, und eine geneigte Fläche (4b), die unter einem Winkel β ungleich null gegenüber der Grundfläche (4a) ausgerichtet ist, aufweist, wobei dieser Winkel variabel ist und entlang der Länge des Ausgleichskeils (4) von einem Wert nahe 0° an einem ersten Ende (4c) des Keils bis zu einem Wert βₘ variiert, um an einem dem ersten gegenüberliegenden zweiten Ende (4c) entlang der Länge des Ausgleichskeils wieder auf einen Wert nahe 0° zu kommen.

18. Scheibe (1) nach Anspruch 17, **dadurch gekennzeichnet, dass** der Winkel β an zwei Enden des Keils nahe 0° und in dessen Mitte nahe 35° ist.

19. Scheibe (1) nach einem der Ansprüche 17 oder 18, **dadurch gekennzeichnet, dass** der Ausgleichskeil (4) wenigstens mit seiner Grundfläche (4a) mit Hilfe von Klebstoffklötzchen (5) auf die Innenseite der Scheibe geklebt ist.

20. Scheibe (1) nach einem der Ansprüche 17 bis 19, **dadurch gekennzeichnet, dass** der Winkel α zwischen der Innenseite der Scheibe und der Mittelebene der Scheibe an wenigstens einem Scheibenabschnitt, der einen Ausgleichskeil (4) umfasst, größer als 35° ist.

21. Scheibe (1) nach einem der Ansprüche 17 bis 20, **dadurch gekennzeichnet, dass** der Außenrand der Grundfläche (4a) im Wesentlichen parallel zum Umfangsrand der Scheibe ist.

22. Scheibe (1) nach einem der Ansprüche 17 bis 21, **dadurch gekennzeichnet, dass** ein Ausgleichskeil (4) aus einem Teil mit V-förmigem Querschnitt besteht, dessen einer Schenkel auf die Scheibe (1) geklebt ist und dessen anderer Schenkel an den Falz (3) geklebt ist, wobei der Verbindungsbereich der beiden Schenkel, in dem der Abstand zwischen ihnen am kleinsten ist, in Richtung des Umfangs der Scheibe (1) angeordnet ist.

23. Fahrzeug, das mit wenigstens einer Scheibe (1), die mittels des Verfahrens nach einem der Ansprüche 1 bis 7 montiert ist, oder mit einer Scheibe (1) nach einem der Ansprüche 17 bis 22 ausgestattet ist.
